(19) Europäisches Patentamt
European Patent Office
Office européen des brevets

(11) EP 0 624 396 B1

(12) EUROPÄISCHE PATENTSCHRIFT

(45) Veröffentlichungstag und Bekanntmachung des Hinweises auf die Patenterteilung:
04.06.1997 Patentblatt 1997/23

(51) Int. Cl.$^6$: B01J 19/00, B01D 5/00

(21) Anmeldenummer: 94107112.8

(22) Anmeldetag: 06.05.1994

(54) **Verfahren und Anlage zur Druckentlastung von Reaktoren**

Process and apparatus for the pressure relief of reactors

Procédé et dispositif pour la dépressuration des réacteurs

(84) Benannte Vertragsstaaten:
AT BE CH DE DK ES FR GB GR IE IT LI LU MC NL PT SE

(30) Priorität: 11.05.1993 DE 4315634

(43) Veröffentlichungstag der Anmeldung:
17.11.1994 Patentblatt 1994/46

(73) Patentinhaber: Hafkesbrink, Sven Dipl.-Ing.
D-59077 Hamm (DE)

(72) Erfinder: Hafkesbrink, Sven Dipl.-Ing.
D-59077 Hamm (DE)

(74) Vertreter: Fritz, Edmund Lothar, Dipl.-Chem. et al
Patentanwaltskanzlei Fritz
Mühlenberg 74
59759 Arnsberg (DE)

(56) Entgegenhaltungen:
EP-A- 0 004 167

• CHEMIE-INGENIEUR-TECHNIK, Bd.64, Nr.2, Februar 1992, WEINHEIM Seiten 183 - 184 K.HERMANN ET AL. 'Direktkondensation notentspannter Dampf/Gas-Gemische in einem Strahlkondensator'

**Beschreibung**

Die vorliegende Erfindung betrifft ein Verfahren zur Druckentlastung von Reaktoren, bei dem man zunächst in einem ersten Schritt durch Notentspannung des Reaktors einen Stoffstrom freisetzt und diesen über eine Rohrleitung zu einem Auffangbehälter leitet, in dem eine Direktkondensation des Gas- und Dampfanteile enthaltenden Stoffstroms in einem Kühlmedium mittels Strahlkondensatoren erfolgt, sowie eine Anlage für die Durchführung des genannten Verfahrens. Es ist aus der Literatur in jüngerer Zeit ein Verfahren der genannten Art bekannt geworden (siehe u.a. Chem.-Ing. Tech. 64 (1992) Nr. 2, Seite 183 bis 184). Bei diesem bekannten Verfahren wird z.B. die Druckentlastung des Reaktors über ein Sicherheitsventil oder eine Berstscheibe vorgenommen, da im Notfall bei einem unzulässigen Druckanstieg im Reaktor die Stoffströme aufgrund der Menge und Toxizität nicht in die Atmosphäre abgelassen werden dürfen. Da der Stoffstrom neben den kondensierbaren Gas- und Dampfanteilen auch flüssige Bestandteile enthält, wurde es bislang für notwendig erachtet, zwischen den notentspannten Reaktor und den Behälter, in dem die Direktkondensation mittels Strahlkondensator erfolgt, einen Flüssigkeitsabscheider zu schalten, in dem zunächst die flüssigen Bestandteile des Stoffstroms abgeschieden werden, wobei anschließend das übrigbleibende Dampf/Gasgemisch zum Reaktor, in dem dann die Direktkondensation erfolgt, weitergeleitet wird. Dieser erforderliche Flüssigkeitsabscheider ist ein zusätzlicher Behälter, der je nach den jeweiligen Verfahrensbedingungen ein ausreichend großes Auffangvolumen aufweisen muß. Es besteht daher ein Bedarf, Verfahren und Aufbau der Anlage zu vereinfachen.

Die Aufgabe der vorliegenden Erfindung ist es, ein Verfahren zur Druckentlastung von Reaktoren der vorgenannten Art weiterzuentwickeln, insbesondere im Hinblick auf eine rationellere großtechnische Anwendung.

Die Lösung dieser Aufgabe liefert ein erfindungsgemäßes Verfahren mit den kennzeichnenden Merkmalen des Hauptanspruchs bzw. eine erfindungsgemäße Anlage mit den kennzeichnenden Merkmalen des Anspruchs 6.

Anhand umfangreicher Versuche konnte nun überraschend festgestellt werden, daß entgegen bisheriger Annahmen auch die Direktkondensation eines heterogenen Dampf-/Gas-/Flüssigkeitsgemischs mittels Strahlkondensatorer in einem Auffangbehälter möglich ist. Dies bedeutet, daß dann der Auffangbehälter, in dem die Direktkondensation erfolgt, direkt dem druckentlasteten Reaktor nachgeschaltet werden kann und der bislang für notwendig gehaltene Flüssigkeitsabscheider entfällt. Es liegt auf der Hand, daß dies zu einer wesentlichen Rationalisierung insbesondere bei großtechnischer Anwendung des Verfahrens führt. In den Strahlkondensatoren erfolgt eine turbulente Vermischung des Gasphase, Dampfphase und Flüssigphase enthaltenden Stoffstroms und des Kühlmediums, die zur Kondensation der Dampf- und Gasanteile führt. Die Vorteile der Direktkondensation mittels Strahlkondensatoren, nämlich der intensive Wärme-, Stoff- und Impulsaustausch zwischen Gas- und Flüssigphase und die dadurch bedingte vergleichsweise geringe Menge an Kühlmedium, die benötigt wird, bleiben bei dem erfindungsgemäßen Verfahren erhalten. Das Volumen des Auffangbehälters kann entsprechend gering gehalten werden. Die in den Unteransprüchen genannten Merkmale betreffen die bevorzugte Weiterbildung des erfindungsgemäßen Verfahrens bzw. der erfindungsgemäßen Anlage.

Ein Ausführungsbeispiel einer Anlage zur Durchführung des erfindungsgemäßen Verfahrens wird nachfolgend anhand der Zeichnung erläutert. Dabei zeigen

Fig. 1        eine schematisch vereinfachte Darstellung der erfindungsgemäßen Anlage;

Fig. 2        eine vergrößerte Detailansicht eines in der Anlage gemäß Fig. 1 eingesetzten Strahlkondensators in schematisch vereinfachter Darstellung.

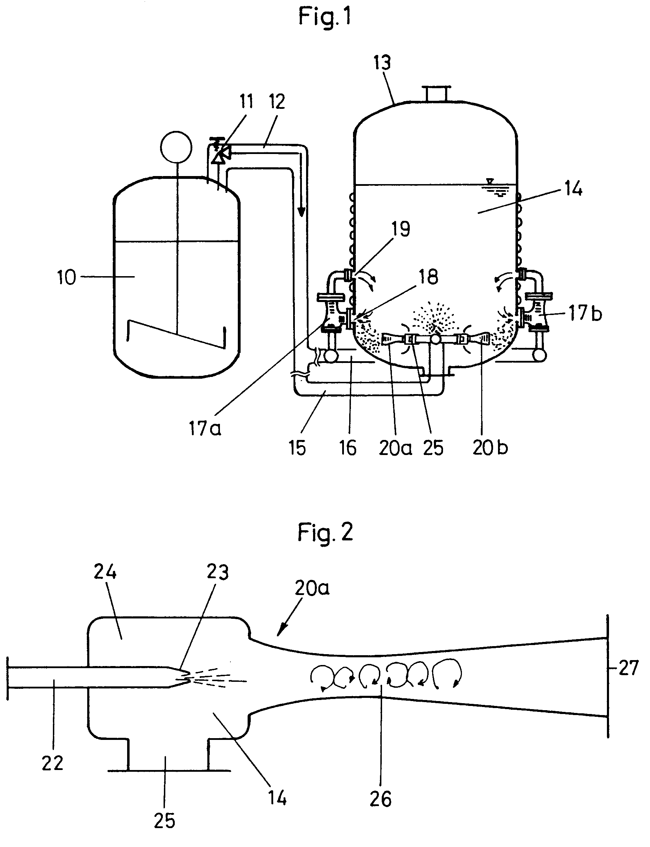

Eine erfindungsgemäße Anlage gemäß Fig. 1 umfaßt einen Reaktor 10, in dem eine Reaktion stattfindet. Der Reaktor ist mit einem Sicherheitsventil oder einer Berstscheibe 11 ausgerüstet, über die bei Entstehen eines Überdrucks im Notfall ein Stoffstrom in die Rohrleitung 12 entweichen kann. Diese Rohrleitung 12 führt zu dem Auffangbehälter 13. Dieser Auffangbehälter 13 kann entweder offen sein oder auch unter Druck stehen. Der Auffangbehälter 13 enthält ein flüssiges Kühlmedium 14, über dem sich eine Gasphase befindet. Bei dieser Gasphase kann es sich auch um ein Schutzgas handeln. Als Kühlmedium 14 dient vorzugsweise Wasser. Die Verbindungsleitung 12 zwischen Reaktor 10 und Auffangbehälter 13 verzweigt sich in eine untere Rohrleitung 15, die im unteren Bereich in den Auffangbehälter 13 eintritt und in eine obere Zweigleitung 16. An diese Zweigleitung 16 sind mehrere externe Strahlkondensatoren 17a, 17b gemäß der Erfindung angeschlossen. Die Strahlkondensatoren 17a, 17b saugen über die Ansaugöffnung 18 jeweils Kühlmedium aus dem Auffangbehälter 13 an und geben dieses Kühlmedium zusammen mit dem eingedüsten kondensierten Gas-/Dampf-/Flüssigkeitsgemisch über die Eintrittsöffnung 19 in den Auffangbehälter, wo es sich mit dem Hauptvolumen des Kühlmediums 14 vermischt. Außerdem sind mehrere interne Strahlkondensatoren 20a, 20b vorgesehen, die mit der unteren Rohrleitung 15 verbunden sind und die innerhalb des Auffangbehälters 14 in dem Kühlmedium angeordnet sind. Über die Rohrleitung 15 wird in diese internen Strahlkondensatoren 20a, 20b ebenfalls das über die Leitung 12 kommende Gas-/Dampf-/Flüssigkeitsgemisch eingedüst, wobei Kühlmedium 14 über Ansaugöffnungen 21 der Strahlkondensatoren eingesaugt wird.

Der prinzipielle Aufbau der Strahlkondensatoren 20a, 20b, der auch im Prinzip demjenigen der externen Strahlkondensatoren 17a, 17b entspricht wird nachfolgend anhand von Fig. 2 näher beschrieben. Der Strahlkondensator 20a weist eingangsseitig eine Treibdüse 22 auf, deren vorderes Düsenende 23 in der Mischkammer 24 endet. Das eingedüste Gas-/Dampf-/Flüssigkeitsgemisch tritt also mit einer hohen Strömungsgeschwindigkeit aus der Treibdüse 22 in die Mischkammer 24 ein. Über die Ansaugöffnung 25 wird das Kühlmedium 14 in die Mischkammer 24 angesaugt und vermischt sich dort mit dem Gas-/Dampf-/Flüssigkeitsgemisch und tritt mit einer hohen Strömungsgeschwindigkeit in zwei- oder dreiphasiger turbulenter Strömung in die Mischdüse 26 ein. Diese Mischdüse 26 ist im Strömungsweg in Verlängerung und mit axialem Abstand zum vorderen Ende 23 der Treibdüse 22 angeordnet, wobei bei dem Ausführungsbeispiel die Mischdüse 26 sich zunächst ausgehend von der Mischkammer 24 etwas verjüngt und sich dann im weiteren Verlauf etwa trichterförmig erweitert, wobei das Gemisch an der Austrittsöffnung 27 der Mischdüse 26 austritt.

Nachfolgend wird die vorliegende Erfindung anhand eines Berechnungsbeispiels näher erläutert.

Ein Reaktor zur Polymerisation von 1,3-Butadien soll mit einem Notentspannugs- und Auffangsystem ausgestattet werden. Der Reaktor hat ein Volumen von 60 m³ und die Reaktion läuft bei 16 bar ab. Ein solcher Reaktor muß mit einer Notentspannungseinrichtung ausgestattet sein. Es wird hierfür eine Berstscheibe mit einer Querschnittsfläche von 14.600 mm² eingebaut. Im Fall eines Ansprechens der Berstscheibe findet eine Notentspannung des Reaktors statt. Durch den Druckabfall wird ein Nachverdampfen des Butadiens hervorgerufen, welches mit einem starken Aufschäumen einhergeht. Somit findet nach einer Aufwallzeit von 1 bis 2 Sekunden ein zweiphasiges Ausströmen statt. Um nun den austretenden Stoffstrom auffangen und die dampfförmigen Anteile bei Umgebungstemperatur kondensieren zu können, muß das Auffangsystem bei 6 bar arbeiten. Unter diesen Bedingungen tritt eine Menge von 25.000 kg flüssigem Butadien und 5.500 kg dampfförmigem Butadien aus.

Um die obengenannte Stoffmenge auffangen zu können, muß ein Auffangvolumen zur Verfügung gestellt werden und weiterhin genug Kühlmedium um eine Kondensation des Butadiens bei 6 bar zu ermöglichen.

Die Siedetemperatur von Butadien bei 6 bar beträgt 52° C. Die Kühlflüssigkeit hat eine Temperatur von ca. 20° C. Um eine sichere Kondensation auch in der Endphase der Notentspannung zu gewährleisten, darf die Temperatur im Auffangbehälter nicht über 42° C steigen (d.h. es wird eine Unterkühlung von 10 K nicht unterschritten). Eine weitere wichtige Temperatur ist die Siedetemperatur des Butadiens bei 16 bar. Sie beträgt 97° C. Mit ihr kann die notwendige Menge an Kühlmedium bestimmt werden, um das flüssige Butadien auf 42° C abzukühlen. Als Kühlmedium kann Wasser verwendet werden, allerdings sollte sowohl Frostschutzmittel (Glykol) als auch ein Reaktionsstopper (um eine Nachpolymerisation im Auffangbehälter zu vermeiden) zugemischt werden.

**Berechnung des notwendigen Kühlmediums:**

Die vom Kühlmedium aufzunehmende Wärmemenge $Q_B$ ist zusammengesetzt aus der Kondensation des Dampfes und der Abkühlung der Flüssigkeit. Sie berechnet sich folgendermaßen (Stoffwerte sind dem VDI-Wärmeatlas, 6. Auflage, 1993 entnommen).

$$Q_B = \dot{m}_D \cdot \Delta H_V + \dot{m}_D \cdot c_p \cdot \Delta T_D + \dot{m}_{FL} \cdot c_p \cdot \Delta T_{FL} = 5{,}43 \cdot 10^6 \text{ kJ,}$$

mit

$m_D$ = 5.500 kg,
$m_{FL}$ = 25.000 kg,
$\Delta H_V$ = 350 kJ/kg,
$c_p$ = 2,45 kJ/kg K,
$\Delta T_D$ = 10 K,
$\Delta T_{FL}$ = 55 K.

Das Kühlmedium muß dementsprechend $5{,}43 \cdot 10^6$ kJ aufnehmen und darf dabei nicht über 42° C erwärmt werden.

$$\dot{m}_W = \frac{Q_B}{c_p \cdot \Delta T} = 5{,}9 \cdot 10^4 \text{ kg}$$

mit

$c_p$ = 4,18 kJ/kg K,
$\Delta T$ = 22 K.

Mit der Dichte von 998, kg/m³ für Wasser ergibt sich ein notwendiges Volumen von 59m³ für das Kühlmedium. Im Auffangbehälter muß ebenfalls das flüssige Butadien aufgenommen werden. Es hat bei 42° C eine Dichte von 592 kg/m³. Damit ergibt sich das bereitzustellende Auffangvolumen mit 52 m³. Um nun sowohl das Kühlmedium als auch das Butadien aufzunehmen, wird ein Behälter mit 120 m³ zur Verfügung gestellt.

**Bestimmung der Anzahl der notwendigen Strahlkondensatoren:**

Um ein einwandfreies Funktionieren der Notentspannungseinrichtung zu gewährleisten, muß die Querschnittsfläche der Treibdüsen der Strahlkondensatoren das Doppelte der Notentspannungsquerschnittsfläche betragen. Dies ist im hier aufgeführten Beispiel 2 x 14.600 mm². Beim Einsatz von Strahlapparaten mit einem Treibdüsendurchmesser von 10 mm (handelsübliche Dampfstrahlflüssigkeitserhitzer) ergibt sich eine Anzahl von vierzig Strahlapparaten zur Gewährleistung eines sicheren Betriebes. Man kann hier beispielsweise zehn Strahlkondensatoren um den Auffangbehälter anbringen und dreißig Strahlkondensatoren innenliegend einsetzen.

Die Zuleitung zum Auffangsystem sollte die vierfache Querschnittsfläche der Berstscheibe nicht unterschreiten. Es ergibt sich demnach eine Rohrleitung DN 300, PN 40.

**Bestimmung der Abluft:**

Das Auffangsystem arbeitet wie oben beschrieben, bei einem Druck von 6 bar. Es braucht allerdings nicht vorgespannt zu sein, da bei der Notentspannung automatisch der notwendige Druck aufgebaut wird. Bis der Druck von 6 bar erreicht wird, entsteht somit keine Abluft. Erst nach Erreichen dieser Grenze kann Abluft entweichen. Für die oben angegebenen Parameter, d.h. bei einem Auffangbehältervolumen von 120 m³ und einer maximalen Flüssigkeitsfüllmenge von 111 m³, verbleibt ein Gasvolumen von 9 m³. Bei der Kompression von 60 m³ freiem Gasvolumen vor der Notentspannung verbleiben 10 m³ Gas bei 6 bar Druck. Es wird somit 1 m³ Abluft bei 6 bar, d.h. 6 m³ Abluft bei Normaldruck, frei. Geht man vom ungünstigsten Fall aus, daß die gesamte Abluft aus Butadien besteht, so werden 15 kg freigesetzt. Dies entspricht einem massenbezogenen Abscheidegrad von 99,95 %.

**Patentansprüche**

1. Verfahren zur Druckentlastung von Reaktoren, bei dem man zunächst in einem ersten Schritt durch Notentspannung des Reaktors einen Stoffstrom freisetzt und diesen über eine Rohrleitung zu einem Auffangbehälter leitet, in dem eine Direktkondensation des Gas- und Dampfanteile enthaltenden Stoffstroms in einem Kühlmedium mittels Strahlkondensatoren erfolgt, dadurch gekennzeichnet, daß man den bei der Notentspannung aus dem Reaktor (10) austretenden Stoffstrom als heterogenes Dampf-/Gas-/Flüssigkeitsgemisch direkt über Rohrleitungen (12, 15, 16) zu einem Auffangbehälter (13) leitet und dort unmittelbar ohne vorherige Abscheidung der flüssigen Phase über Strahlkondensatoren (17a, 17b, 20a, 20b) in einem Kühlmedium (14) kondensiert.

2. Verfahren zur Druckentlastung von Reaktoren nach Anspruch 1, dadurch gekennzeichnet, daß man den aus dem notentspannten Reaktor (10) austretenden Stoffstrom auftrennt und einen Teil über eine Zweigleitung (16) und externe Strahlkondensatoren (17a, 17b), die sich seitlich außerhalb des Auffangbehälters (13) befinden, kondensiert und einen weiteren Anteil des Stoffstroms über eine Rohrleitung (15) in den Auffangbehälter leitet und dort über interne Strahlkondensatoren (20a, 20b), die sich im Auffangbehälter (13) im Kühlmedium (14) befinden, kondensiert.

3. Verfahren zur Druckentlastung von Reaktoren nach Anspruch 1 oder 2, dadurch gekennzeichnet, daß im Auffangbehälter (13) ein Druck über Atmosphärendruck herrscht.

4. Verfahren zur Druckentlastung von Reaktoren nach einem der Ansprüche 1 bis 3, dadurch gekennzeichnet, daß der Überdruck im Auffangbehälter (13) bei der Notentspannung aufgebaut wird.

5. Verfahren zur Druckentlastung von Reaktoren nach einem der Ansprüche 1 bis 4, dadurch gekennzeichnet, daß als Kühlmedium Wasser dient, das gegebenenfalls Zusätze wie Frostschutzmittel, Reaktionsstopper oder dergleichen enthält.

6. Anlage zur Druckentlastung von Reaktoren, die eine Notentspannungseinrichtung aufweisen, die über eine Rohrleitung mit einem Auffangbehälter verbunden ist, in dem sich ein Kühlmedium befindet, wobei Strahlkondensatoren im oder am Auffangbehälter vorgesehen sind, die eine Direktkondensation des aus dem Reaktor austretenden Gas- und Dampfanteile enthaltenden Stoffstroms bewirken, dadurch gekennzeichnet, daß der über die Notentspannungseinrichtung (11) druckentlastete Reaktor (10) über eine Rohrleitung (12, 15, 16) unmittelbar mit den Strahlkondensatoren (17a, 17b, 20a, 20b) des ein flüssiges Kühlmedium (14) enthaltenden Auffangbehälters (13) verbunden ist, so daß in dem Auffangbehälter die Direktkondensation eines heterogenen Dampf-/Gas-/Flüssigkeitsgemischs erfolgt.

7. Anlage zur Druckentlastung von Reaktoren nach Anspruch 6, dadurch gekennzeichnet, daß die von der Notentspannungseinrichtung (11) kommende Rohrleitung (12) sich verzweigt in eine Rohrleitung (15), die in den Auffangbehälter (13) führt und mit internen Strahlkondensatoren (20a, 20b) verbunden ist, die im Auffangbehälter im Kühlmedium (14) angeordnet sind und in eine Zweigleitung (16), die mit externen Strahlkondensatoren (17a, 17b) verbunden ist, die sich außen am Auffangbehälter (13) befinden, wobei das Kühlmedium (14) über Ansaugöffnungen (25) auch in die externen Strahlkondensatoren (17a, 17b) gelangt und deren Austrittsöffnung (27) der Mischdüse (26) mit dem Behälterinneren des Auffangbehälters (13) verbunden ist.

## Claims

1. Process for the pressure relief of reactors in which in a first step a current of substances is released by an emergency pressure reduction of the reactor which is passed via a pipeline to a collecting vessel in which a direct condensation of the current of substances containing gas and steam portions takes place in a coolant by means of jet condensers, characterised in that the current of substances leaving the reactor (10) at the emergency pressure reduction is passed as a heterogeneous steam/gas/liquid mixture directly via pipelines (12, 15, 16) to a collecting vessel (13) and there condenses directly without previous separation of the liquid phase by means of jet condensers (17a, 17b, 20a, 20b) in a coolant (14).

2. Process for the pressure relief of reactors as claimed in claim 1, characterised in that the current of substances leaving the emergency pressure reduced reactor (10) is split and a part thereof is condensed via a branch pipe (16) and external jet condensers (17a, 17b) positioned laterally outside of the collecting vessel (13), whereas a further part of the current of substances is passed via a pipeline (15) to the collecting vessel and is condensed there by means of internal jet condensers (20a, 20b) positioned in the collecting vessel (13) in the coolant (14).

3. Process for the pressure relief of reactors as claimed in claim 1 or 2, characterised in that in the collecting vessel (13) there is a pressure above atmospheric pressure.

4. Process for the pressure relief of reactors as claimed in any one of claims 1 to 3, characterised in that the excess pressure in the collecting vessel (13) is built up at the emergency pressure reduction.

5. Process for the pressure relief of reactors as claimed in any one of claims 1 to 4, characterised in that water serves as a coolant which contains additives as antifreezing agents, reaction stoppers and the like if necessary.

6. Apparatus for the pressure relief of reactors which comprise an emergency pressure reduction device connected via a pipeline to a collecting vessel containing a coolant, jet condensers being provided at or in the collecting vessel which cause a direct condensation of the current of substances leaving the reactor and containing gas and steam portions, characterised in that the reactor (10) pressure relieved by the emergency pressure reduction device (11) is connected directly via a pipeline (12, 15, 16) to the jet condensers (17a, 17b, 20a, 20b) of the collecting vessel (13) containing a liquid coolant (14) so that the direct condensation of a heterogeneous steam/gas/liquid mixture is effected in the collecting vessel.

7. Apparatus for the pressure relief of reactors as claimed in claim 6, characterised in that the pipeline (12) coming from the emergency pressure reduction device (11) forms branches, namely on the one hand a pipeline (15) leading into the collecting vessel (13) and being connected to internal jet condensers (20a, 20b) arranged in the collecting vessel in the coolant (14), and, on the other hand, a branch pipe (16) connected to external jet condensers (17a, 17b) positioned outside at the collecting vessel (13), the coolant also reaching the external jet condensers (17a, 17b), the outlet opening (27) of the mixing nozzle (26) of which being connected to the vessel interior of the collecting vessel (13).

## Revendications

1. Procédé pour la dépressurisation de réacteurs, dans lequel pour commencer, lors d'une première étape, par une dépressurisation de secours du réacteur, on libère un courant de fluide qui par une canalisation tubulaire est transféré dans un réservoir collecteur, dans lequel a lieu, l'aide de condenseurs à jet, une condensation directe dans un fluide de refroidissement du courant de fluide contenant des parties de gaz et de vapeur,
caractérisé en ce que le courant de fluide qui s'échappe du réacteur (10) lors de la dépressurisation de secours est sous forme de mélange hétérogène de vapeur, de gaz et de liquide transféré vers un réservoir collecteur (13) et y est directement, sans séparation préalable de la phase liquide, condensé dans un fluide de refroidissement (14) à l'aide de condenseurs à jet (17a,17b, 20a, 20b)

2. Procédé pour la dépressurisation de réacteurs suivant la revendication 1,
   caractérisé en ce que l'on partage le courant de fluide s'échappant du réacteur (10) après le dépressurisation de secours et en ce qu'une partie du courant est transférée par une canalisation de dérivation (16) vers des condenseurs à jet extérieurs (17a, 17b) situés latéralement à l'extérieur du réservoir collecteur (13) et est condensée, tandis qu'une autre partie du courant de liquide est par une canalisation tubulaire (15) transférée vers le réservoir collecteur et y est condensée à l'aide de condenseurs à jet internes (20a, 20b), qui sont disposés dans le réservoir collecteur (13) dans le fluide de refroidissement.

3. Procédé pour la dépressurisation de réacteurs suivant la revendication 1 ou 2,
   caractérisé en ce que dans le réservoir collecteur (13) est établi une pression supérieure à la pression atmosphérique.

4. Procédé pour la dépressurisation de réacteurs suivant l'une quelconque des revendications 1 à 3,
   caractérisé en ce que la surpression dans le réservoir collecteur (13) est établie pendant la dépressurisation de secours.

5. Procédé pour la dépressurisation de réacteurs suivant l'une quelconque des revendications 1 à 4,
   caractérisé en ce que le fluide de refroidissement utilisé est de l'eau, laquelle contient éventuellement des additifs tels que des produits antigel, des agents d'arrêt de réaction ou similaires.

6. Dispositif pour la dépressurisation de réacteurs, qui présentent un dispositif de dépressurisation de secours, qui par une canalisation tubulaire est relié à un réservoir collecteur, dans lequel se trouve un fluide de refroidissement, où des condenseurs à jet sont prévus dans ou sur le réservoir collecteur, qui produisent une condensation directe du courant de fluide contenant des parties de gaz et de vapeur s'échappant du réacteur,
   caractérisé que le réacteur (10) dépressurisé à l'aide du dispositif de dépressurisation de secours (11) est par l'intermédiaire d'une canalisation tubulaire (12, 15, 16) directement connecté aux condenseurs à jet (17a, 17b, 20a, 20b) du réservoir collecteur (13) contenant un fluide de refroidissement liquide, de sorte qu'une condensation directe du mélange hétérogène vapeur, gaz et liquide a lieu dans le réservoir collecteur.

7. Dispositif pour la dépressurisation de réacteurs suivant la revendication 6,
   caractérisé en ce que la canalisation tubulaire (12) issue du dispositif de dépressurisation de secours (11) est subdivisée en une canalisation tubulaire de dérivation (15) qui aboutit au réservoir collecteur (13) et est reliée à des condenseurs à jet internes (20a, 20b), disposés dans le réservoir collecteur au sein du fluide de refroidissement (14) et en une canalisation de dérivation (16) qui est reliée à des condenseurs à jet extérieurs (17a, 17b), situés à l'extérieur sur le réservoir collecteur (13), le fluide de refroidissement (14) arrivant au travers des ouvertures d'aspiration (25) également aux condenseurs à jet extérieurs (17a, 17b) et dont l'ouverture de sortie (27) de la tuyère mélangeuse (26) est reliée à l'enceinte intérieure du réservoir collecteur (13).

Fig.1

Fig. 2